# EUROPÄISCHE PATENTSCHRIFT

(11) **EP 2 008 931 B1**
(45) Veröffentlichungstag und Bekanntmachung des Hinweises auf die Patenterteilung: **09.11.2011**
(21) Anmeldenummer: 08010291.6
(22) Anmeldetag: 05.06.2008
(51) Int. Cl.: B64C 13/24

(54) **Verfahren zur Ansteuerung eines Antriebssystems und Antriebssystem**
Method for controlling a drive system and drive system
Procédé de commande d'un système d'entraînement et système d'entraînement

(30) Priorität: 29.06.2007 DE 102007030059
(43) Veröffentlichungstag der Anmeldung: 31.12.2008
(73) Patentinhaber: Liebherr-Aerospace Lindenberg GmbH, 88161 Lindenberg/Allgäu (DE)
(72) Erfinder: Hauzenberger, Stefan, Dipl.-Ing., 88239 Wangen (DE); Hauber, Bernhard, Dipl.-Ing., 88171 Weiler (DE)
(74) Vertreter: Laufhütte, Dieter

(56) Entgegenhaltungen:
- EP-A2- 0 873 937
- DE-A1-102004 055 740
- DE-B3- 10 308 301
- US-A- 4 745 815
- US-A- 5 655 636
- US-A1- 2006 113 933

## Beschreibung

Die vorliegende Erfindung betrifft ein Verfahren zur Ansteuerung eines Antriebssystems für Steuerflächen oder Arbeitssysteme eines Flugzeuges, bei welchem die Drehzahl einer Antriebseinheit des Antriebssystems geregelt wird. Des weiteren betrifft die vorliegende Erfindung ein entsprechendes Antriebssystem für Steuerflächen oder Arbeitssysteme eines Flugzeuges mit einer Antriebseinheit mit Drehzahlregelung und einer Steuerung.

Steuerflächen an Flugzeugen dienen dabei einerseits als primäre Steuerung der Lagekontrolle des Flugzeugs und andererseits als sekundäre Steuerung zur Konfiguration des Flügels für die Anpassung des Flügelprofils an die gewünschte Fluggeschwindigkeit.

Die primäre Flugsteuerung umfaßt dabei in der Regel die Querruder, Seitenruder, Höhenruder sowie die verstellbaren Höhenflossen.

Die sekundäre Flugsteuerung umfaßt die Landeklappen an der Hinterkante der Flügel, Vorflügel an deren Vorderkante sowie die Bremsklappen auf der Oberseite der Flügel.

Alle diese Steuerflächen werden in modernen Großflugzeugen entweder mit elektrischer oder hydraulischer Energie betätigt, welche üblicherweise von einer Antriebseinheit zur Verfügung gestellt wird und über eine Transmission auf die Steuerflächen übertragen wird.

Daneben umfassen Flugzeuge weitere Arbeitssysteme, so genannte Utility Systems, wie z. B. Frachttorantriebe oder Schubumkehrantriebe, welche ebenfalls über hydromechanische oder elektromechanische Antriebe betätigt werden.

Die Antriebssysteme weisen dabei üblicherweise zur Vermeidung von strukturellen Schäden im Falle einer Überbelastung z. B. durch Auflaufen auf die Endanschläge, Böenlasten oder durch Verklemmen der mechanischen Antriebselemente Überlastsicherungen auf.

Dabei ist es bekannt, in den hydraulischen Servoaktuatoren der primären Flugsteuerung mittels Überdruckventilen den Kammerdruck der Stellzylinder zu limitieren. Da die Stellkraft proportional zum Kammerdruck ist, limitiert das Ansprechen des Überdruckventils auch die Stellkraft.

Eine weitere bekannte Methode, insbesondere in elektromechanischen Antrieben der primären Flugsteuerung, ist die Messung der Stellkraft mit elektrischen Sensoren, deren Signal in einer elektronischen Kontrolleinheit ausgewertet wird. Bei Überschreiten einer maximalen vorgegebenen Last wird der Antrieb abgeregelt.

Aus US 2006/0113933 A1 ist dabei eine sensorbasierte Methode zur Lastlimitierung für elektromechanische Stellantriebe bekannt, bei welcher über die Messung des Motorantriebsmomentes ein unzulässiger Lastfall erkannt wird.

Auch DE 10308301 B3 sowie DE 2004055740 A1 beschreiben sensorbasierte elektronische Einrichtungen zur Begrenzung von Überlasten in Hochauftriebssystemen.

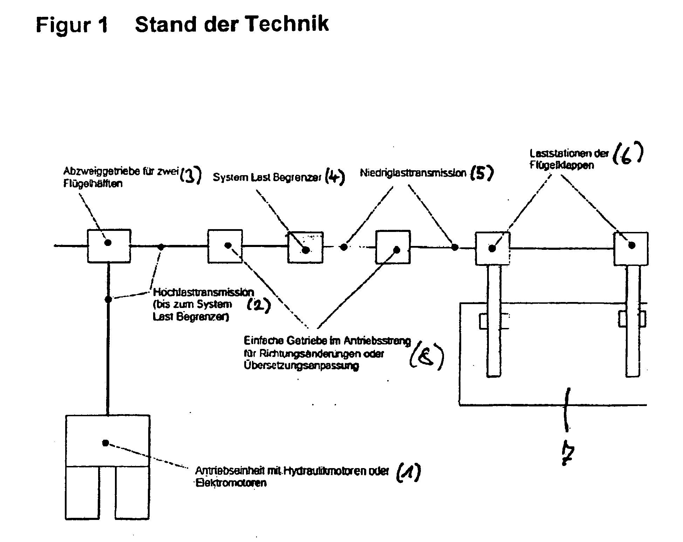

In herkömmlichen Antriebssystemen der verstellbaren Höhenflossen werden dagegen häufig mechanische Lastbegrenzer eingesetzt. Ebenso werden in den Antriebssystemen der Hochauftriebseinrichtung, sofern es sich um Systeme mit einem zentralen Antriebseinheit mit Transmissionswellen zur Leistungsübertragung handelt, ebenfalls mechanische Lastbegrenzer eingesetzt. Ein solches System ist dabei in Figur 1 gezeigt. Dieses umfaßt eine drehzahlgeregelte zentrale Antriebseinheit 1, welche über ein Transmissionswellensystem die Laststationen der Flügelklappen 7 antreibt. Die Drehmomente werden dabei von der Antriebseinheit 1 über eine Transmissionswelle zunächst zu einem Halbflügel-Abzweiggetriebe 3 übertragen, von welchem die Transmissionstränge der beiden Flügel abzweigen. Dabei sind in jedem Transmissionsstrang einfache Getriebe 8 für Richtungsänderung oder Übersetzungsanpassung sowie Abzweiggetriebe 6 für die Laststationen der Flügelklappen 7 vorgesehen.

Der Schutz vor hohen Lastspitzen im Klemmfall wird dabei durch die Installation von Stationsdrehmomentbegrenzern in den Abzweiggetrieben 6 der Laststationen und durch Halbsystemdrehmomentbegrenzer 4 im Wellenstrang realisiert. Die Halbsystemdrehmomentbegrenzer 4 sind dabei in der Transmission zwischen dem Halbflügel-Abzweiggetriebe 3 für die zwei Flügelhälften und den Abzweiggetrieben 6 der Laststation der Flügelklappen angeordnet und sprechen ab einer maximal für einen Flügelstrang zulässigen Gesamtlast an, so dass die Lasten in dem Bereich hinter den Halbsystemdrehmomentbegrenzern 4 begrenzt werden. Hierdurch kann die Transmission in diesem Bereich als Niedriglasttransmission 5 ausgeführt werden, während die Transmission von der Antriebseinheit bis zu den Halbsystemdrehmomentbegrenzern 4 als Hochlasttransmission 2 ausgeführt werden muss, was Gewicht und Kosten erhöht.

Aufgabe der vorliegenden Erfindung ist es nunmehr, ein Verfahren zur Ansteuerung eines Antriebssystems sowie ein entsprechendes Antriebssystem zur Verfügung zu stellen, in welchem die dynamischen Lastspitzen bei einem Überlastfall möglichst niedrig gehalten werden können, und welches möglichst leicht und kostengünstig realisiert werden kann.

Diese Aufgabe wird von einem Verfahren gemäß Anspruch 1 und einem Antriebssystem gemäß Anspruch 8 gelöst. Vorteilhafte Ausführungen der vorliegenden Erfindung sind dabei Gegenstand der Unteransprüche.

Die vorliegende Erfindung beruht dabei auf der Erkenntnis, dass mechanische leistungsübertragende Systeme beim Start der Bewegung wegen des Übergangs von der Haftreibung in die Gleitreibung ein höheres Antriebsdrehmoment bzw. eine höhere Antriebskraft benötigen als in der Bewegung. Insbesondere die hydraulischen Antriebsmotoren haben zudem für das Anlaufen einen deutlich geringeren Wirkungsgrad als in der Bewegung. Deshalb haben die Antriebe, in der Regel Hydromotoren oder Elektromotoren, ein deutlich höheres Momentenpotential, als zur Bewegung der Antriebssysteme unter Betriebslast notwendig ist. Dies führt jedoch dazu, dass im Falle einer auftretenden Überlast, z. B. im Klemmfall, die Antriebseinheiten die leistungsübertragenden Komponenten mit im Vergleich zur Betriebslast sehr hohen Drehmoment- oder Kraftspitzen belasten.

Erfindungsgemäß wird diese Problematik nun dadurch gelöst, dass nach einem Anfahrvorgang der Antriebseinheit die während des weiteren Betriebs zur Drehzahlregelung der Antriebseinheit maximal zur Verfügung stehende Antriebsleistung reduziert wird. Hierdurch wird sichergestellt, dass im Falle einer auftretenden Überlast die Antriebseinheiten die nachgeschalteten Komponenten nicht mit voller Antriebsleistung belasten, so dass insgesamt die Überlastspitzen reduziert werden können. Der Normalbetrieb des Antriebssystems wird dabei nicht behindert, da zunächst zur Überwindung der Haftreibung mit hoher Antriebsleistung gearbeitet wird und im darauffolgenden Betrieb ohnehin nicht die volle Antriebsleistung benötigt wird.

Vorteilhafterweise steht dabei während des Anfahrvorgangs die volle Antriebsleistung zur Verfügung. Bei Verwendung von Hydromotoren mit verstellbarem Schluckvolumen (variable displacement hydraulic motor, VDHM) können diese z. B. ihre Schwenkscheibe zu 100% öffnen, Elektromotoren können den vollen Anlaufstrom zum Anfahren aufnehmen. In dieser Konfiguration kann die Antriebseinheit mit maximaler Leistungsaufnahme auch unter ungünstigen Startbedingungen anfahren.

Weiterhin vorteilhafterweise wird nach dem Anfahrvorgang die maximal zur Verfügung stehende Antriebsleistung auf einen Wert reduziert, welcher zur normalen Bewegung des Systems nach dem Anfahrvorgang unter maximalen Betriebslasten gerade noch ausreicht. Zum Beispiel wird hier die maximale Auslenkung der Schwenkscheibe des VDHM auf einen Wert festgelegt, der zur Bewegung des Systems unter maximalen Betriebslasten und unter Berücksichtigung der gegenwärtigen Druckversorgung gerade noch ausreicht. Entsprechend wird bei den elektrischen Antrieben die Stromlimitierung eingestellt.

Somit ist die Antriebseinheit in der Lage, ohne Einbruch der Drehzahl im ungestörten Betrieb zu arbeiten, da der Drehzahlregelung die für den ungestörten Betrieb notwendigen Antriebsleistungen zur Verfügung stehen. Im Klemmfall sorgt die Reduzierung der Antriebsleistung dagegen dafür, dass die nachfolgenden Elemente nicht mit der vollen Antriebsleistung der Antriebseinheit belastet werden.

Vorteilhafterweise erfolgt die Bestimmung, ob der Anfahrvorgang beendet ist, anhand der Drehstellung und/oder der Drehzahl des Antriebs. Erkennt das System, dass der Antrieb aus dem Stand angefahren ist, wird die zur Drehzahlregelung in der Antriebseinheit maximal zur Verfügung stehende Antriebsleistung reduziert. Selbst wenn der Klemmfall dabei bereits vor dem Anfahren der Antriebseinheit vorlag, wird diese aufgrund der Elastizität des Antriebsstrangs dennoch zunächst anfahren, so dass die Leistungsbegrenzung auch hier zum Tragen kommt.

Die vorliegende Erfindung umfasst weiterhin ein Verfahren zur Ansteuerung eines Antriebssystems für Steuerflächen oder Arbeitssysteme eines Flugzeugs, wobei die Drehzahl einer Antriebseinheit des Antriebssystems geregelt wird und ein Überlastfall durch den Vergleich einer Solldrehzahl und einer über einen Drehzahlsensor bestimmten Drehzahl erkannt wird. Im Falle einer Blockierung im Antriebssystem wird dabei die Drehzahl der Antriebswelle zwischen der Blockierstelle und der Antriebseinheit durch das Ansteigen der Lastdrehmomente reduziert. In der Folge entsteht eine unzulässige Differenz zwischen der Solldrehzahl und der gemessenen tatsächlichen Drehzahl, welche erfasst und als unzulässiger Lastverlauf erkannt wird.

Dabei ist für den Fachmann offensichtlich, dass eine solche Lastfall-Erkennung auch unabhängig von der erfindungsgemäßen Leistungsreduzierung von großem Vorteil ist. Die Kombination mit der erfindungsgemäßen Leistungsreduzierung nach dem Anfahrvorgang hat jedoch den entscheidenden Vorteil, dass aufgrund der Leistungslimitierung des Motors der Drehzahlabfall bereits bei einer geringeren Lastüberschreitung als bei voller Leistungsaufnahme eintritt. Damit kann ein fehlerhafter Systemzustand frühzeitiger erkannt werden, und eine übermäßige Momenten- bzw. Kraftüberhöhung vermieden werden. Ohne die erfindungsgemäße Leistungsreduzierung würde dagegen die Istdrehzahl erst dann von der Solldrehzahl abweichen, wenn im Klemmfall die Betriebslast die Maximallast der Antriebseinheit übersteigt. Bei dem erfindungsgemäßen System wird ein Überlastfall dagegen früher erkannt.

Vorteilhafterweise wird dabei im Überlastfall die Antriebsleistung reduziert oder ein Bremsvorgang ausgelöst. Denkbar ist dabei, dass eine geringfügige Überschreitung der maximalen Betriebslast nicht sofort zum Stoppen des Antriebs führt, sondern zunächst eine Reduzierung der Antriebsdrehzahl ausgelöst wird, so dass das System mit reduzierter Leistung noch verfügbar ist, und dass erst bei Überschreiten einer weiteren Lastschwelle die Notabschaltung erfolgt.

Alternativ kann ein durch einen Algorithmus vorgegebener Bremsvorgang, wie er in DE 102004055740 A1, offenbart ist, ausgelöst werden.

Weiterhin vorteilhafterweise wird dabei die Drehzahl der Antriebseinheit über einen ersten Drehzahlsensor geregelt, während ein weiterer Drehzahlsensor an einer Stelle der Transmission zwischen der Antriebseinheit und den Steuerflächen oder Arbeitssystemen angeordnet ist und der Erkennung eines Überlastfalls dient. Da der weitere Drehzahlsensor damit näher an den möglichen Klemmstellen angeordnet ist, ist hierdurch eine schnellere Erkennung von Überlastfällen möglich, ohne dass sich bereits im gesamten Antriebsstrang ein unzulässiges Drehmoment aufgebaut hat. Die Regelung der Motordrehzahl erfolgt damit über einen motoreigenen Sensor, während das Drehzahlsignal von dem weiteren Drehzahlsensor ausschließlich der Monitorfunktion dient, um einen Überlastfall zu erkennen. Hierdurch wird insbesondere die Belastung der Transmission zwischen Antriebseinheit und dem weiteren Drehzahlsensor erheblich vermindert, da für ein Ansprechen der erfindungsgemäßen Überlastsicherung lediglich eine Drehzahlabweichung zwischen der Solldrehzahl an der Stelle des weiteren Drehzahlsensors und der tatsächlich dort gemessenen Drehzahl ausreicht, ohne dass die Antriebseinheit bereits das Gesamtsystem gegen die Blockierkraft an der Blockierstelle belastet.

Durch das erfindungsgemäße Verfahren kann die Spitzenbelastung der leistungsführenden Systemkomponenten erheblich reduziert werden, so dass Gewicht und Kosten im Vergleich zum Stand der Technik deutlich reduziert werden können.

Die vorliegende Erfindung umfaßt weiterhin ein Antriebssystem für Steuerflächen oder Arbeitssysteme eines Flugzeuges, mit einer Antriebseinheit mit Drehzahlregelung und einer Steuerung, wobei die Steuerung eine Leistungsreduktionsfunktion aufweist, welche nach einem Anfahrvorgang die während des weiteren Betriebs zur Drehzahlregelung der Antriebseinheit maximal zur Verfügung stehende Antriebsleistung reduziert. Durch ein solches Antriebssystem ergeben sich die gleichen Vorteile, wie sie bereits bezüglich des Verfahrens beschrieben wurden. Die Steuerung des Antriebssystems übernimmt dabei automatisch die Leistungsreduktion während dem Betrieb.

Weiterhin vorteilhafterweise ist die Steuerung dabei so ausgestaltet, dass sie die weiter oben beschriebenen Verfahren automatisch durchführt. Hierdurch ergeben sich wiederum die oben beschriebenen Vorteile.

Vorteilhafterweise ist die Antriebseinheit dabei eine schnellregelbare Antriebseinheit, insbesondere ein Hydromotor mit verstellbarem Schluckvolumen oder ein bürstenloser Elektromotor. Diese modernen, schnell regelbaren Antriebseinheiten erleichtern die Umsetzung des erfindungsgemäßen Verfahrens, in der Steuerung für das Anfahren und den Bewegungszustand unterschiedliche angepaßte Leistungslimitierungen zu realisieren. Insbesondere werden hierdurch unnötige Belastungen des Systems vermieden, sowie die weiter oben beschriebene neue Detektionsmöglichkeit für auftretende Überlasten eröffnet.

Vorteilhafterweise weist die Steuerung dabei ein elektronisches sensorbasiertes System zum Erkennen eines Überlastfalles auf. Insbesondere kann hierdurch auf die im Stand der Technik bekannten mechanischen Drehmomentbegrenzer, zumindest die Halbsystemdrehmomentbegrenzer, verzichtet werden. Ebenso kann das Gesamtsystem leichter ausgeführt werden.

Die vorliegende Erfindung weist weiterhin ein Antriebssystem für Steuerflächen oder Arbeitssysteme eines Flugzeugs auf, mit einer Antriebseinheit mit Drehzahlregelung und einer Steuerung, wobei das Antriebssystem einen Drehzahlsensor zur Bestimmung der Drehzahl der Antriebseinheit und/oder der Transmission auf weist und ein Überlastfall durch den Vergleich einer Solldrehzahl und einer über den Drehzahlsensor bestimmten Drehzahl erkannt wird. Insbesondere im Zusammenspiel mit der während dem Betrieb reduzierten Maximalleistung der Antriebseinheit wird dabei z. B. in einem Klemmfall die tatsächliche Drehzahl früh von der Solldrehzahl abweichen, so dass ein Überlastfall erkannt wird, ohne dass die Antriebseinheit das System mit Maximalkraft belastet.

Vorteilhafterweise weist die Antriebseinheit dabei einen Drehzahlsensor auf, über welchen die Drehzahl der Antriebseinheit geregelt wird, während ein weiterer Drehzahlsensor an einer Stelle der Transmission angeordnet ist und der Erkennung eines Überlastfalls dient. Vorteilhafterweise sind die Drehzahlsensoren dabei entweder in einem der Stranggetriebe oder im Abzweiggetriebe der ersten Laststation integriert, so dass sie den im Stand der Technik verwendeten mechanischen Halbflügeldrehmomentbegrenzer ersetzen. Im Falle einer Blockierung im Antriebssystem wird die Drehzahl des Stranggetriebes bzw. des Abzweiggetriebes dabei durch das Ansteigen der Lastdrehmomente reduziert, so dass eine unzulässige Differenz zwischen der Solldrehzahl und der gemessenen tatsächlichen Drehzahl an dieser Stelle erkannt wird, woraufhin die Steuerung einen Überlastfall erkennt und entsprechende Gegenmaßnahmen einleitet.

Die vorliegende Erfindung wird nun anhand eines Ausführungsbeispiels und Zeichnungen näher beschrieben.

Dabei zeigen
- Figur 1: ein Antriebssystem für Steuerflächen eines Flugzeugs gemäß dem Stand der Technik, und
- Figur 2: ein Ausführungsbeispiel des erfindungsgemäßen Antriebssystems für Steuerflächen eines Flugzeugs.

Das in Fig. 1 gezeigte Antriebssystem nach dem Stand der Technik wurde einleitend bereist beschrieben.

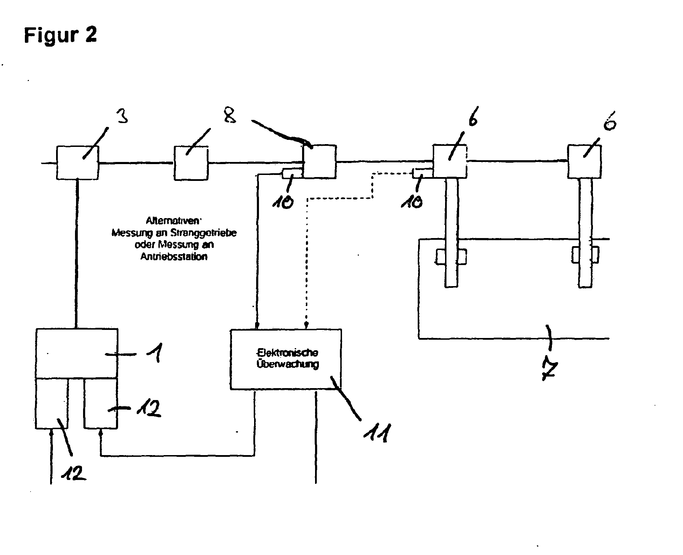

Das in Figur 2 gezeigte erfindungsgemäße Antriebssystem umfaßt nun eine zentrale Antriebseinheit 1 mit elektrischen oder hydraulischen Antriebsmotoren 12, wobei die Drehzahl der Antriebseinheit über einen antriebseigenen Sensor geregelt wird.

Eine Transmission verläuft von der zentralen Antriebseinheit zunächst zu einem Abzweiggetriebe 3 für die zwei Flügelhälften. Von hier aus verzweigt sich die Transmission auf die beiden Flügel, wobei in Figur 2 nur ein Flügel dargestellt ist. Im Antriebsstrang der Flügel sind dabei Getriebe 8 z. B. für die Richtungsänderung oder zur Übersetzungsanpassung angeordnet, während die Laststationen der Flügelklappen über Abzweiggetriebe 6 von der Transmission angetrieben werden.

Dabei ist eine elektronische Steuerung 11 vorgesehen, welche die zentrale Antriebseinheit 1 ansteuert und erfindungsgemäß für den Startvorgang die Leistungsversorgung der Antriebsmotoren 12 unlimitiert zur Verfügung stellt, d. h. ein VDHM kann seine Schwenkscheibe zu 100 % öffnen, Elektromotoren können den vollen Anlaufstrom zum Anfahren aufnehmen. In dieser Konfiguration kann die Antriebseinheit 1 mit maximaler Leistungsaufnahme unter den ungünstigen Startbedingungen anfahren. Nach dem Anlaufen begrenzt die Steuerung 11 die maximale Auslenkung der Schwenkscheibe des VDHM auf einen Wert, der zur Bewegung des Systems unter maximalen Betriebslasten und unter Berücksichtigung der gegenwärtigen Druckversorgung gerade noch ausreicht. Entsprechend wird bei den elektrischen Antrieben die Stromlimitierung eingestellt. Somit ist die Antriebseinheit in der Lage, ohne Einbruch der Drehzahl im ungestörten Betrieb zu arbeiten.

Weiterhin ist nimmt die elektronische Steuerung 11 Daten von einem Drehzahlsensor 10 auf, welcher entweder an einem der Stranggetriebe 8 oder an einem Abzweiggetriebe 6 der ersten Laststation angeordnet ist.

Steigt nun die Betriebslast über einen definierten Maximalwert an, wird die gemessene Istdrehzahl von eine kommandierten Solldrehzahl abweichen, was auf eine Störung im System durch unzulässig hohe Betriebslast deutet. Beispielsweise Im Falle einer Blockierung im Antriebssystem wird die Drehzahl der Antriebswelle zwischen der Blockierstelle und der Antriebseinheit durch das Ansteigen der Lastdrehmomente reduziert. In der Folge entsteht eine unzulässige Differenz zwischen der Solldrehzahl und der gemessenen tatsächlichen Drehzahl, welche erfasst und als unzulässiger Lastverlauf erkannt wird. Hierzu wird von der Steuerung 11 das Signal vom Drehzahlsensor 10 mit einer Solldrehzahl verglichen, wobei eine übermäßige Abweichung als unzulässiger Lastverlauf erkannt wird. Die Regelelektronik führt daraufhin einen durch einen Algorithmus vorgegebenen Bremsvorgang aus, der z. B. wie in DE 102004055740 A1 verlaufen kann, und damit auch die dort beschriebenen Vorteile aufweist. Die Daten vom Drehzahlsensor 10 dienen dabei in dem erfindungsgemäßen System lediglich dem Monitoring zur Überlasterkennung, während die Drehzahlregelung über einen antriebseigenen Sensor erfolgt.

Aufgrund der erfindungsgemäßen Leistungslimitierung des Motors tritt der Drehzahlabfall dabei bereits bei einer geringeren Lastüberschreitung auf als bei voller Leistungsaufnahme. Damit wird ein fehlerhafter Systemzustand frühzeitig erkannt, und die elektronische Kontrolleinheit kann den zentralen Antrieb durch definiertes Abregeln ohne oder mit nur geringer Momenten-/Kraftüberhöhung deaktivieren.

Bei dem erfindungsgemäßen Verfahren bzw. der erfindungsgemäßen Steuerung können die im konventionellen System notwendigen Halbsystemlastbegrenzer 4, wie in Figur 1 gezeigt, entfallen, während gleichzeitig die Spitzenbelastung der leistungsführenden Systemkomponenten erheblich reduziert wird. Hierdurch werden Systemgewicht und Systemkosten im Vergleich zum Stand der Technik deutlich vermindert.

## Patentansprüche

1. Verfahren zur Ansteuerung eines Antriebssystems für Steuerflächen (7) oder Arbeitssysteme eines Flugzeugs, wobei die Drehzahl einer Antriebseinheit (1) des Antriebssystems geregelt wird,
**dadurch gekennzeichnet,**
**dass** nach einem Anfahrvorgang die während des weiteren Betriebs zur Drehzahlregelung der Antriebseinheit (1) maximal zur Verfügung stehende Antriebsleistung reduziert wird.

2. Verfahren nach Anspruch 1, wobei während des Anfahrvorgangs die volle Antriebsleistung zur Verfügung steht.

3. Verfahren nach Anspruch 1 oder 2, wobei nach dem Anfahrvorgang die maximal zur Verfügung stehende Antriebsleistung auf einen Wert reduziert wird, welcher zur normalen Bewegung des Systems nach dem Anfahrvorgang unter maximalen Betriebslasten gerade ausreicht.

4. Verfahren nach einem der vorangegangenen Ansprüche, wobei die Bestimmung, ob der Anfahrvorgang beendet ist, anhand der Drehstellung und/oder Drehzahl des Antriebs erfolgt.

5. Verfahren nach einem der vorangegangenen Ansprüche, wobei ein Überlastfall durch den Vergleich einer Solldrehzahl und einer über einen Drehzahlsensor bestimmten Drehzahl erkannt wird.

6. Verfahren nach Anspruch 5, wobei im Überlastfall die Antriebsleistung reduziert wird oder ein Bremsvorgang ausgelöst wird.

7. Verfahren nach Anspruch 5 oder 6, wobei die Drehzahl der Antriebseinheit (1) über einen ersten Drehzahlsensor (10) geregelt wird und ein weiterer Drehzahlsensor (10) an einer Stelle einer Transmission zwischen der Antriebseinheit (1) und den Steuerflächen (7) oder Arbeitssystemen angeordnet ist und der Erkennung eines Überlastfalls dient.

8. Antriebssystem für Steuerflächen oder Arbeitssysteme eines Flugzeugs, mit einer Antriebseinheit (1) mit Drehzahlregelung und einer Steuerung (11),
**dadurch gekennzeichnet,**
**dass** die Steuerung (11) eine Leistungsreduktionsfunktion aufweist, welche nach einem Anfahrvorgang die während des weiteren Betriebs zur Drehzahlregelung der Antriebseinheit (1) maximal zur Verfügung stehende Antriebsleistung reduziert.

9. Antriebssystem nach Anspruch 8, wobei die Steuerung (11) so ausgestaltet ist, dass sie eines der Verfahren nach den Ansprüchen 1 bis 7 automatisch durchführt.

10. Antriebssystem nach einem der Ansprüche 8 oder 9, wobei die Antriebseinheit (1) eine schnell regelbare Antriebseinheit ist, insbesondere ein Hydromotor mit verstellbarem Schluckvolumen oder ein bürstenloser Elektromotor.

11. Antriebssystem nach einem der Ansprüche 8 bis 10, wobei die Steuerung (11) ein elektronisches sensorbasiertes System zum Erkennen eines Überlastfalls aufweist

12. Antriebssystem nach einem der Ansprüche 8 bis 11, wobei ein Drehzahlsensor zur Bestimmung der Drehzahl der Antriebseinheit (1) und/oder einer Transmission zwischen der Antriebseinheit (1) und den Steuerflächen oder Arbeitssystemen vorgesehen ist, wobei ein Überlastfall durch den Vergleich einer Solldrehzahl und einer über den Drehzahlsensor (10) bestimmten Drehzahl erkennbar ist.

13. Antriebssystem nach Anspruch 11, wobei die Antriebseinheit (1) einen ersten Drehzahlsensor aufweist, über welchen die Drehzahl der Antriebseinheit (1) geregelt wird, und ein weiterer Drehzahlsensor (10) an einer Stelle einer Transmission zwischen den Antriebseinheit (1) und den Steuerflächen oder Arbeitssystemen angeordnet ist und der Erkennung eines Überlastfalls dient.

14. Antriebssystem nach Anspruch 13, wobei der weitere Drehzahlsensor (10) an einem Stranggetriebe (8) oder einem Abzweiggetriebe der Transmission angeordnet ist.

## Claims

1. Method for controlling a drive system for control surfaces (7) or working systems of an aeroplane, whereby the rotational speed of a drive unit (1) of the drive system is regulated,
**characterised in that**
after a start-up procedure, the maximal driving power available during further operation for regulating the rotational speed of the drive unit (1) is reduced.

2. Method according to claim 1, whereby the full driving power is available during the start-up procedure.

3. Method according to claim 1 or 2, whereby after the start-up procedure, the maximal driving power available is reduced to a value, which is just sufficient for normal movement of the system after the start-up procedure under maximal operating loads.

4. Method according to any one of the preceding claims, whereby determining whether the start-up procedure has ended takes place by means of the rotary position and/or rotational speed of the drive.

5. Method according to any one of the preceding claims, whereby the event of an overload is detected by the comparison of a desired rotational speed and a rotational speed determined by a rotational speed sensor.

6. Method according to claim 5, whereby in the event of an overload, the driving power is reduced, or a braking process is triggered.

7. Method according to claim 5 or 6, whereby the rotational speed of the drive unit (1) is regulated by a first rotational speed sensor (10), and a further rotational speed sensor (10) is arranged at a point of a transmission between the drive unit (1) and the control surfaces (17) or working systems, and serves for detecting the event of an overload.

8. Drive system for control surfaces or working systems of an aeroplane, with a drive unit (1) with rotational speed control and a control (11).
**characterised in that**
the control (11) comprises a power reduction function, which reduces the maximal driving power available during further operation for regulating the rotational speed of the drive unit (1) after a start-up procedure.

9. Drive system according to claim 8, whereby the control (11) is arranged in such a way that it automatically carries out one of the methods according to claims 1 to 7.

10. Drive system according to any one of claims 8 or 9, whereby the drive unit (1) is a quickly controllable drive unit, particularly a hydraulic motor with adjustable absorption volume, or a brushless electric motor.

11. Drive system according to any one of claims 8 to 10, whereby the control (11) comprises an electronic, sensor-based system for detecting an event of an overload.

12. Drive system according to any one of claims 8 to 11, whereby a rotational speed sensor is provided for determining the rotational speed of the drive unit (1) and/or of a transmission between the drive unit (1) and the control surfaces or working systems, whereby an event of an overload can be detected by comparison of a desired rotational speed and a rotational speed determined by the rotational speed sensor (10).

13. Drive system according to claim 11, whereby the drive unit (1) comprises a first rotational sensor, by means of which the rotational speed of the drive unit (1) is regulated, and a further rotational speed sensor (10) in a position of
a transmission between the drive unit (1) and the control surfaces or working systems is arranged, and serves for detection of the event of an overload.

14. Drive system according to claim 13, whereby the further rotational speed sensor (10) is arranged on a cable gear (8) or a branch gear of the transmission.

## Revendications

1. Procédé d'amorçage d'un système d'entraînement pour des surfaces de commande (7) ou des systèmes de travail d'un avion, dans lequel le régime d'une unité d'entraînement (1) du système d'entraînement est réglé,
**caractérisé en ce que,**
après une opération de démarrage, la puissance d'entraînement maximale mise à disposition pendant le fonctionnement ultérieur pour le réglage du régime de l'unité d'entraînement (1) est réduite.

2. Procédé selon la revendication 1, dans lequel la puissance d'entraînement complète est mise à disposition pendant l'opération de démarrage.

3. Procédé selon la revendication 1 ou 2, dans lequel, après l'opération de démarrage, la puissance d'entraînement maximale mise à disposition est réduite à une valeur qui est suffisante pour le déplacement normal du système après l'opération de démarrage avec des charges de service maximales.

4. Procédé selon l'une des revendications précédentes, dans lequel on détermine si l'opération de démarrage est achevée à l'aide de la position de rotation et/ou du régime de l'entraînement.

5. Procédé selon l'une des revendications précédentes, dans lequel un cas de surcharge est détecté par la comparaison d'un régime prévu et d'un régime déterminé par un capteur de régime.

6. Procédé selon la revendication 5, dans lequel la puissance d'entraînement est réduite en cas de surcharge ou une opération de freinage est déclenchée.

7. Procédé selon la revendication 5 ou 6, dans lequel le régime de l'unité d'entraînement (4) est réglé au moyen d'un premier capteur de régime (10) et un autre capteur de régime (10) est disposé en un emplacement d'une transmission entre l'unité d'entraînement (1) et les surfaces de commande (7) ou les systèmes de travail et sert à la détection d'un cas de surcharge.

8. Système d'entraînement pour des surfaces de commande ou des systèmes de travail d'un avion, comprenant une unité d'entraînement (1) avec réglage du régime et une commande (11),
**caractérisé en ce que**
la commande (11) présente une fonction de réduction de puissance qui, après une opération de démarrage, réduit la puissance d'entraînement maximale mise à disposition pendant le fonctionnement ultérieur pour le réglage du régime de l'unité d'entraînement (1).

9. Système d'entraînement selon la revendication 8, la commande (11) étant conçue de telle sorte qu'elle met en oeuvre automatiquement l'un des procédés selon les revendications 1 à 7.

10. Système d'entraînement selon l'une des revendications 8 ou 9, l'unité d'entraînement (1) étant une unité d'entraînement réglable rapidement, en particulier un moteur hydraulique avec volume d'absorption réglable ou un moteur électrique sans brosse.

11. Système d'entraînement selon l'une des revendications 8 à 10, la commande (11) présentant un système électronique basé sur capteur pour la détection d'un cas de surcharge.

12. Système d'entraînement selon l'une des revendications 8 à 11, un capteur de régime étant prévu pour la détermination du régime de l'unité d'entraînement (1) et/ou d'une transmission entre l'unité d'entraînement (1) et les surfaces de commande ou systèmes de travail, un cas de surcharge pouvant être détecté par la comparaison d'un régime prévu et d'un régime déterminé par le capteur de régime (10).

13. Système d'entraînement selon la revendication 11, l'unité d'entraînement (1) présentant un premier capteur de régime, par lequel le régime de l'unité d'entraînement (1) est réglé, et un autre capteur de régime (10) étant disposé à un emplacement d'une transmission entre l'unité d'entraînement (1) et les surfaces de commande ou les systèmes de travail et servant à la détection d'un cas de surcharge.

14. Système d'entraînement selon la revendication 13, l'autre capteur de régime (10) étant disposé sur un engrenage de branche (8) ou un engrenage de dérivation de la transmission.
